(19) Europäisches Patentamt
European Patent Office
Office européen des brevets

(11) Publication number: **0 178 079**
**A1**

# (12) EUROPEAN PATENT APPLICATION

(21) Application number: 85306495.4

(22) Date of filing: 12.09.85

(51) Int. Cl.[4]: C 08 K 3/34, C 08 K 3/04, C 08 K 9/04, C 08 L 21/00

(30) Priority: 17.09.84 US 651614

(43) Date of publication of application: 16.04.86 Bulletin 86/16

(84) Designated Contracting States: AT BE CH DE FR GB IT LI LU NL SE

(71) Applicant: AMOCO CORPORATION, 200 East Randolph Drive, Chicago Illinois 60601 (US)

(72) Inventor: Weber, Kenneth Earl, 11214 Burbank Boulevard, North Hollywood California 91601 (US)
Inventor: Oberlin, Dirk, 12473 E. Amherst Circle, Aurora Colorado 80014 (US)

(74) Representative: Lewin, John Harvey et al, Elkington and Fife High Holborn House 52/54 High Holborn, London WC1V 6SH (GB)

## (54) Rubber composition and method.

(57) A rubber composition containing a reinforcing filler of carbon black and kaolin or metakaolin and a method of making it are disclosed.

EP 0 178 079 A1

# RUBBER COMPOSITION AND METHOD

## BACKGROUND OF THE INVENTION

This invention relates generally to a rubber composition and more particularly concerns a rubber composition comprising carbon black and a second reinforcing filler consisting of kaolin or metakaolin.

The precise formulation of any rubber compound depends on its intended end use. Different end uses require very specific mechanical properties. To a degree, the choice of filler and agent for coupling the rubber and filler determines the mechanical properties of the rubber compound. Because of the properties imparted to rubber compositions by carbon black, carbon black is the primary reinforcing filler almost universally used in certain types of rubber compositions, for example, those intended for use in tires for automobiles, trucks or other equipment. However, because of increases in the prices of petroleum products in general, and carbon black in particular, there has been great interest in replacing all or at least a significant part of the carbon black in rubber compositions with a less expensive material, in particular, one of the readily available non-carbon black fillers.

For example, Manual 3-S entitled "Sierra Mistron Vapor In Rubber Compounds," published in 1964 by Sierra Talc and Chemical Company (now Cyprus Mines Company), discloses that the replacement with talc of about 30 volume percent of the carbon black filler in a rubber composition affords a synergistic improvement in the tensile strength of the rubber composition.

Quaternary ammonium salts have also been disclosed for use with fillers or pigments. Technical Report 35-T entitled "Factors Affecting the Dispersion of Ultra-Fine Particle Size Mistron Talcs in Water and the Effects of Wetting and Dispersion Agents," published in 1956 by Sierra Talc & Clay Company (now Cyprus Mines Company)

describes quaternary ammonium salts as effective dispersants for talc in water. Technical Report 48-T entitled "Mistrons in Hydrocarbon Solvents--Effects of Cationic Surfactants," published in 1958 by the former Sierra Talc & Clay Company describes certain quaternary ammonium salts as dispersants of talc in plastics, rubber and other polymeric dispersions. German Offenlegungsschrift 2,224,003 which issued in 1972 contains a very similar disclosure. E. K. Lotakova, G. A. Blokh, E. V. Tsipenyuk, I. G. Lebed, T. G. Blokh, F. D. Ovcharenko, N. G. Vasileo, A. D. Chugai and V. A. Mashchenko, "Properties of Rubbers Filled with Modified Kaolins," Kozh.-Obuvn. Prom-st. Vol. 18(6), pp. 45-7 (1976) discloses the reinforcement of rubber with kaolin modified with benzyldimethylalkylammonium chloride. N. S. Gilinskaya, G. A. Sankina, M. S. Skorobogatova, "Effect of the Chemical Nature of Dihydric Phenols and Quaternary Ammonium Salts on the Properties of Vulcanized Rubbers Made from the Rubber SKR-26," Kauch. Rezina, Vol. 3, pp. 10-12 (1980) discloses the vulcanization of flourorubber in the presence of quaternary ammonium salts.

Burke, U.S. Patents Nos. 3,686,113; 3,689,452; and 3,840,382 disclose a rubber composition comprising a silica pigment, a quaternary ammonium salt and carbon black. Berg et al., U.S. Patents Nos. 3,846,365; 3,922,240; and 3,998,778 disclose a method for making a powdered, flowable rubber composition comprising a solid filler wherein a quaternary ammonium salt is used as an emulsifier. Although Berg et al. disclose in each patent that the filler is preferably carbon black, they state in each case that in place of or "in addition thereto, light-colored fillers can also be used, e.g., highly active silicic acid, kaolin, ground slate, etc." and in U.S. Patent No. 3,922,240 that "[c]ombinations of carbon black with light-colored fillers, preferably silicic acid, are also possible." In the Berg methods, the rubber and filler composition is formed by pouring an

aqueous emulsion of the filler, rubber elastomer, and a quaternary salt emulsifier into a sodium silicate solution, from which the granular rubber precipitates. Although Berg does not disclose the composition of the rubber granules, analysis of a polybutadiene rubber produced by a duplication of Example 1 of the '778 patent showed the rubber contained about 53 weight % of the silicate in the precipitating solution. Thus, all rubber compositions produced by the Berg methods contain silicate. Moreover, Berg does not disclose the beneficial effect on modulus properties of a quaternary ammonium salt when mechanically mixed with certain rubbers before vulcanization, and thus shows no recognition of quaternary salts as a coupling agent.

U. S. 4,032,501, "Dry Blendable Solution Rubber Powders and Process," Schulz, issued June 28, 1977, like Berg discloses a method of producing a rubber powder. As an emulsifier Schulz employs a "foam inhibiting surfactant" which is disclosed as either a nonionic polyether alcohol or a tetraalkyl ammonium salt having more than 25 total carbon atoms. Schulz, however, does not disclose use of clay as a second reinforcing filler, nor does he disclose the quaternary salts as a rubber additive.

Kealy et al., U. S 3,627,723, "Filler Loaded Elastomer Compositions Having Improved Extrudability and Physical Properties", issued December 14, 1971, disclose rubber compositions of an α-olefin/non-conjugated diene copolymer, a filler of carbon black or mineral or mixtures thereof, and a surfactant. Named as possible mineral fillers are kaolin, calcined kaolin, magnesium silicate, blance fixe, whiting, silica and talc. The surfactant can be one of three broad classes, anionic, nonionic, and cationic, and named as a cationic are quaternary ammonium salts. However, the Kealy Examples show little difference in rubber properties due to a change in the surfactant. In contrast, only a quaternary ammonium salt exhibits improved rubber properties when used with a

rubber such as natural rubber or styrene-butadiene rubber.

SUMMARY OF THE INVENTION

The present invention is a method of compounding rubber which comprises mechanically mixing and substantially uniformly dispersing A, B, C or D in a rubber comprising natural rubber. A comprises (1) a particulate Agent G selected from the group consisting of kaolin and metakaolin and having a median particle size in the range of from about 0.01 to about 20 microns, (2) particulate carbon black having a median particle size in the range of from about 0.001 to about 20 microns, and (3) a coupling agent consisting essentially of a quaternary ammonium salt at a level of from about 0.005 to about 15 phr. B comprises (1) a particulate adduct of Agent G and a coupling agent consisting essentially of the quaternary ammonium salt, having a median particle size in the range of from about 0.001 to about 20 microns and present at a level such that the portion thereof contributed from the quaternary ammonium salt is at a level of from about 0.005 to about 15 phr, and (2) the particulate carbon black. C comprises (1) a particulate adduct of the carbon black and a coupling agent consisting essentially of the quaternary ammonium salt, having a median particle size in the range of from about 0.001 to about 20 microns and present at a level such that the portion thereof contributed from the quaternary ammonium salt is at a level of from about 0.005 to about 15 phr, and (2) particulate Agent G. D comprises (1) a particulate adduct of Agent G and a coupling agent consisting essentially of the quaternary ammonium salt having a median particle size in the range of from about 0.01 to about 20 microns and present at a level such that the portion thereof contributed from the quaternary ammonium salt is at a level of from about 0.005 to about 15 phr, and (2) a particulate adduct of the carbon black and a coupling agent consisting essentially of the quaternary ammonium salt having a

median particle size in the range of from about 0.001 to about 20 microns and present at a level such that the portion thereof contributed from the quaternary ammonium salt is at a level of from about 0.005 to about 15 phr.

In the resulting rubber composition, the combined contents of (1) Agent G or the portion of the adduct contributed from Agent G and (2) the carbon black or the portion of the adduct contributed from the carbon black are in the range of from about 5 to about 400 phr and the weight ratio of (1) Agent G or the portion of the adduct contributed from Agent G -to- (2) the carbon black or the portion of the adduct contributed from the carbon black is in the range of from about 1:19 to about 9:1.

The present invention is also a rubber composition formed by the aforesaid method. The present invention is further a rubber composition comprising a substantially uniform dispersion of A, B, C, D or E, with the relative concentration of Agent G and the carbon black as set forth above. E is B, C or D wherein the particulate adduct in B or C and at least one of the particulate adducts in D is also an adduct with the rubber.

In one preferred aspect, the invention comprises a method of making and a composition of natural rubber containing carbon black, kaolin and sufficient quaternary salt to maintain the rubber modulus at least equal to that of a purely carbon black reinforced rubber. Preferably, this aspect comprises clay in an amount up to about 40 volume % of the carbon black and quaternary in an amount of about 1.9 wt. % of the clay.

## BRIEF DESCRIPTION OF THE DRAWINGS

Figure 1 is a plot of $T_{300}$ modulus versus amount of clay in a natural rubber composition.

Figure 2 is a plot of $T_{300}$ modulus versus amount of clay in a styrene-butadiene rubber composition.

Figure 3 is a plot of $T_{300}$ modulus versus amount of clay in natural rubber compositions designed to have at least equivalent properties to a purely carbon black

filled rubber.

## DETAILED DESCRIPTION

According to the method of the present invention, the aforesaid quaternary ammonium salt, carbon black and the reinforcing mineral Agent G selected from the group consisting of kaolin and metakaolin can be mechanically mixed in any convenient, conventional rubber compounding process to form the resulting rubber composition of this invention. The rubber can suitably be natural rubber. Natural rubber is used because of the unexpectedly higher increase in modulus property, when compared to other tire rubbers, seen in natural rubber when formulated according to the invention. However, it is understood that the scope of the claims includes mixtures of natural rubber with other rubbers such as synthetic polyisoprene or polybutadiene wherein the natural rubber comprises at least about 5% and preferably 30% of the elastomer total. At least 5% natural rubber is needed in a rubber mixture to achieve a beneficial effect on the vulcanizate modulus property. Thirty % natural rubber is preferred because vulcanizates with this amount exhibits significantly improved modulus.

While any of the conventional curing agents known to the art can be employed in the method of compounding the rubber composition of this invention, typical curing agents include sulfur or sulfur-donating materials (in combination with suitable accelerators) and peroxide and other free radical producing agents. Preferably, sulfur or a sulfur-donating material is employed.

The second reinforcing filler--other than carbon black--employed in the method and composition of the present invention is selected from the group consisting of kaolin and metakaolin. Kaolin is preferred due to its beneficial reinforcing effects on ultimate elongation and tensile strength.

The median particle size of the particles which contain the filler other than carbon black and which either

are designated as Agent G or are adducts of Agent G and the quaternary ammonium salt, in the method and rubber composition of this invention, preferably is in the range of from about 0.1 micron to about 5 microns. In the present context, the median particle size is determined from a plot of the weight percent of particles versus spherical diameter.

By the term "carbon black" as used herein is meant any carbon black suitable for use by the rubber industry and set forth under the title "carbon blacks" at pages 186-192 of the publication entitled "Rubber World Blue Book" published by B. C. Kovach for Rubber World in 1981 and incorporated herein by reference. Typical suitable carbon blacks include carbon blacks having the ASTM designations N220, N330, N550, and N660.

The median particle size of the carbon black particles in the method and rubber composition of this invention preferably is in the range of from about 0.001 micron to about 1 micron.

The combined contents of (1) Agent G or the portion of the aforesaid adduct contributed from Agent G and (2) the carbon black or the portion of the aforesaid adduct contributed from carbon black are preferably in the range of from about 30 to about 200 phr, more preferably to about 120 phr. The weight ratio of (1) Agent G or the portion of the aforesaid adduct contributed from Agent G -to- (2) the carbon black or the portion of the aforesaid adduct contributed from the carbon black is preferably in the range of from about 1:19 more preferably from about 1:9, to about 1:1.

However, Applicants prefer to determine the amounts of kaolin or metakaolin used in the compositions of the invention on a volume % of the carbon black replaced. (This assumes then that the amount of carbon black is first determined, as in the ASTM-NR formula where 50 phr carbon black is used.) The volume % of carbon black replaced by clay is suitably from about 5 to about

80 vol. %, and preferably about 5 to about 40 vol.% which is preferred because compositions in this range produce vulcanizates having significant properties, such as $T_{300}$ modulus, ultimate elongation and ultimate tensile strength, which are at least equivalent to the properties of purely black reinforced rubber. Examples 62-70 below illustrate this range. Finally, when replacing carbon black with clay on a volume basis, the total amount of reinforcing filler (clay plus carbon black) on a phr basis can exceed the amount of filler in the original rubber formula due to different filler densities.

Without wishing to be bound by theory, Applicants believe the quaternary ammonium salt of the invention functions as the coupling agent for the carbon black and mineral to the rubber. Applicants believe the quaternary salt functions as a coupling agent by (1) increasing the amount of crosslinking between all essential components in the rubber and (2) by wetting of the filler surface. The evidence for the functioning as a coupling agent is the increase in $T_{300}$ modulus seen when the quaternary salt is added. The modulus data is discussed below with the Examples.

Any quaternary ammonium salt can be used in the rubber composition of this invention. Suitable quaternary ammonium salts for use in the rubber composition of this invention are disclosed in Burke, U.S. Patent No. 3,686,113, column 5, line 11 to column 7, line 75, which is incorporated by reference herein. In addition, for the present purposes, "quaternary ammonium salts" include any cyclic salt which contains either within its ring structure or as a substituent on its ring structure at least one nitrogen atom covalently bonded to three moieties and which salt has a highly conjugated, resonance stabilized, substantially planar structure which can be depicted such that the aforesaid nitrogen atom is attached to one of the aforesaid moieties through a double bond and carries a positive charge. Readily

available examples of such compounds include the following: acid fuchsin, acridine red, acridine orange, aniline blue, azure A, azure B, azure C, basic fuchsin, blue tetrazolium, brilliant green, 2-tertiary butyl-5-methylisoxazolium tetrafluoroborate, coomassie brilliant blue R, crystal violet, 3,3'-(3,3'-dimethoxy-4,4'-biphenylene) bis[2-(p-nitrophenyl)-5-phenyltetrazolium chloride], 3-(4,5-dimethyl-2-thiazolyl)-2,5-diphenyl-2H-tetrazolium bromide, ethyl violet, fast green FCF, 1-(p-hydroxyphenyl)-2,4,6-triphenylpyridinium betaine, 2-(p-iodophenyl)-3-(p-nitrophenyl)-5-phenyl-2H-tetrazolium chloride, janus green B, light green SF yellowish, lissamine rhodamine B sulfonyl chloride, methylene blue, methyl green, methyl violet, nile blue A perchlorate, nitron, oxazine 1 perchlorate, pararosaniline acetate, pyronin B, pyronin Y, rhodamine B, rhodamine 6G, rhodamine 110, rhodamine 6G perchlorate, safranin O, thiamine hydrochloride, toluidine blue O, 2,3,5-triphenyl-2H-tetrazolium chloride, xylene cyanole FF, oxacarbocyanine, methylene green, cyanine, carbocyanine, styryl thiacarbocyanine, and 1,1-diethyl-2,2-quinocyanine chloride. In general, many sensitizing dyes are positively charged cyclic compounds with structures that meet the aforesaid requirements. Representative classes of such dyes which are suitable as quaternary ammonium salts include the following: cyanines, merocyanines, carbocyanines, thiacyanines and benzothiazolylrhodanines.

Preferably, the quaternary ammonium salt has a structure of formula I, II, III, IV, or V:

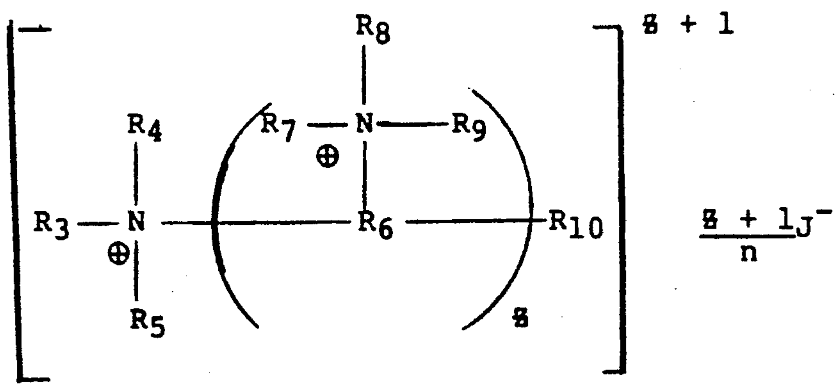

$\frac{z + 1}{n} J^{-n}$ (I)

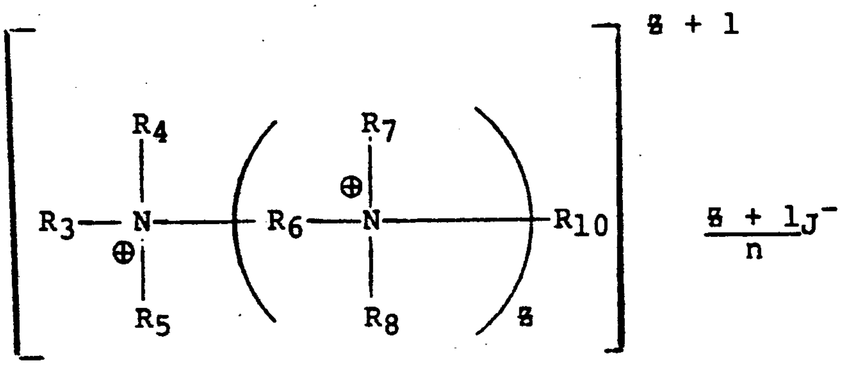

$\frac{z + 1}{n} J^{-n}$ (II)

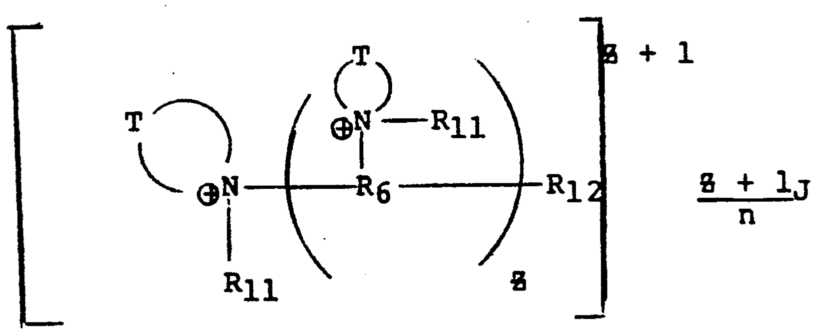

$\frac{z + 1}{n} J^{-n}$ (III)

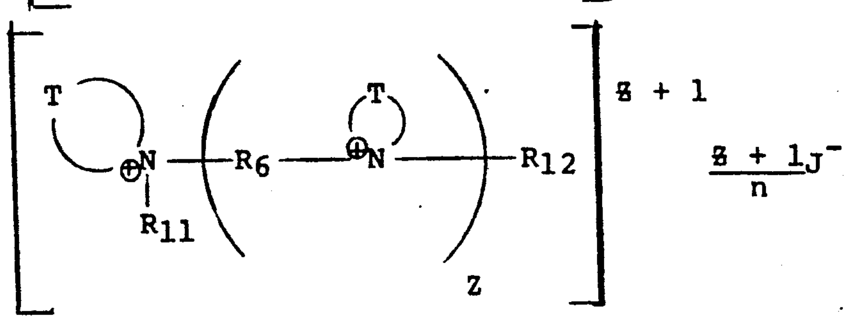

$\frac{z + 1}{n} J^{-n}$ (IV)

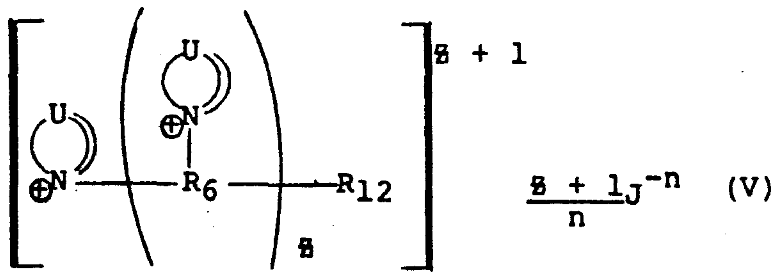

In formulas I, II, III, IV and V, Z is zero or a positive integer from 1 to 100, J is an anionic radical, n is the absolute value of the oxidation state of J and $R_6$ is an alkylenyl radical containing from 2 to 20 carbon atoms or an aryl radical containing from 6 to 14 carbon atoms.

In formulas I and II, $R_3$, $R_4$, $R_5$, $R_7$, $R_8$ and $R_9$ are the same or different and are each selected from the group consisting of: aliphatic radicals containing a total of from 1 to 3 carbon atoms which are saturated or unsaturated and unsubstituted or substituted with at least one hydroxy or alkoxy group; straight- or branched-chain aliphatic radicals containing a total of from 8 to 40 carbon atoms which are saturated or unsaturated and unsubstituted or substituted with at least one hydroxy, alkoxy or polyalkoxy group; and aryl radicals containing from 6 to 18 carbon atoms; and saturated or unsaturated araliphatic radicals containing a total of from 7 to 48 carbon atoms.

In formulas I and II, when Z is zero, $R_{10}$ is selected from the group consisting of the groups described by $R_3$, $R_4$, $R_5$, $R_7$, $R_8$ and $R_9$, and when Z is a positive integer, $R_{10}$ is selected from the group consisting of the groups described by $R_3$, $R_4$, $R_5$, $R_7$, $R_8$ and $R_9$ and a hydrogen atom.

In formulas I and II, (1) at least one of $R_3$, $R_4$, $R_5$, $R_7$, $R_8$, $R_9$, and $R_{10}$ is an aliphatic radical containing a total of from 1 to 3 carbon atoms and

(2) either (a) at least one of $R_3$, $R_4$, $R_5$, $R_7$, $R_8$, $R_9$ and $R_{10}$ is an aliphatic radical containing at least 12 carbon atoms, or (b) at least two of $R_3$, $R_4$, $R_5$, $R_7$, $R_8$, $R_9$ and $R_{10}$ are aliphatic radicals containing at least 8 carbon atoms.

In formulas III and IV, $R_{11}$ is selected from the group consisting of the groups described by $R_3$, $R_4$, $R_5$, $R_7$, $R_8$ and $R_9$ and alkylamidoalkyl or alkylesteralkyl groups containing a total of at least 14 carbon atoms. In formulas III, IV and V, when Z is zero, $R_{12}$ is selected from the group consisting of the groups described by $R_{11}$, and when Z is a positive integer, $R_{12}$ is selected from the group consisting of the groups described by $R_{11}$ and a hydrogen atom.

In formulas III, IV and V, each of T and U is a radical which, in conjunction with each nitrogen atom to which it is shown attached in formula III, IV or V, forms a heterocyclic radical containing at least one nitrogen atom in the ring system and containing only nitrogen and carbon atoms in the ring system, and the T and U portions of the ring system are unsubstituted, or substituted by at least one alkyl group with the total number of ring substituents on each of T and U being from 1 to 32 carbon atoms.

In formulas I, II, III, IV and V, Z preferably is zero or a positive integer from 1 to 5 and more preferably is zero or 1. J is suitably an organic radical such as methyl sulfate or acetate or an inorganic radical such as halide, nitrite, nitrate, sulfate or phosphate.

If $R_3$, $R_4$, $R_5$, $R_7$, $R_8$, $R_9$, $R_{10}$, $R_{11}$, or $R_{12}$ is an aliphatic radical containing from 1 to 3 carbon atoms, preferably the radical is a methyl radical. If $R_3$, $R_4$, $R_5$, $R_7$, $R_8$, $R_9$, $R_{10}$, $R_{11}$, or $R_{12}$ is an aliphatic radical containing at least 8 carbon atoms, such radical preferably contains from 12 to 22 carbon atoms. Furthermore, if $R_3$, $R_4$, $R_5$, $R_7$, $R_8$, $R_9$, $R_{10}$, $R_{11}$ or $R_{12}$ is an aliphatic radical containing at least 8 carbon atoms and a

polyalkoxy radical, preferably the polyalkoxy radical contains from 2 to 15 repeating ethoxy radical units.

If $R_3$, $R_4$, $R_5$, $R_7$, $R_8$, $R_9$, $R_{10}$, $R_{11}$, or $R_{12}$ is an araliphatic radical, such radical preferably contains from 7 to 22 carbon atoms.

Preferably, at least one of $R_3$, $R_4$, $R_5$, $R_7$, $R_8$, $R_9$, $R_{10}$, $R_{11}$ and $R_{12}$ is a methyl radical. At least one of $R_3$, $R_4$, $R_5$, $R_7$, $R_8$, $R_9$, $R_{10}$, $R_{11}$ and $R_{12}$ is preferably an aliphatic radical containing at least 12 carbon atoms, more preferably an aliphatic radical containing from 12 to 22 carbon atoms and most preferably a straight-chain aliphatic radical containing from 12 to 22 carbon atoms.

$R_6$ is preferably an alkylenyl radical containing from 2 to 6 carbon atoms and more preferably an alkylenyl radical containing 2 or 3 carbon atoms.

The sole difference between T in formulas III and IV and U in formula V is that T is attached through two single bonds to the nitrogen atom shown in formulas III and IV, and U is attached through one single and one double bond to the nitrogen atom shown in formula V.

Typical quaternary ammonium radicals formed by T or U in conjunction with the nitrogen atom to which it is shown attached in formula III, IV or V include the following: pyrrolidinium, pyrrolium, pyrrolinium, imidazolium, pyrazolium, triazolium, pyridinium, pyrimidinium, pyridazinium, pyrazinium, triazinium, indolium, indazolium, benzimidazolium, quinolinium, isoquinolinium, cinnolinium, phthalazinium, quinazolinium, quinoxalinium, naphthyridinium, quinolizinium, carbazolium, acridinium, phenazinium, phenanthridinium, phenanthrolinium, benzo[H]isoquinolinium, purinium, porphinium, and pteridinium and the quaternary ammonium salts formed by partial or complete hydrogenation of the heterocyclic rings of any of the aforesaid quaternary ammonium salts.

Preferably the quaternary ammonium salt radical formed by T or U in conjunction with the nitrogen atom to which it is shown attached in formula III, IV or V is an

imidazolinium salt or a pyridinium salt.

Most preferably, the quaternary salt is of Formula I, Z is zero, $R_3$ and $R_4$ are methyl radicals, and $R_5$ and $R_{10}$ are tallow radicals, since such a salt is a very effective coupling agent.

In the rubber composition of this invention formed according to the method of this invention, the quaternary ammonium salt is at a level of from about 0.005 phr, preferably from about 0.10 phr, to about 15 phr, preferably to about 1.5 phr. If introduced directly in the method of this invention, the quaternary ammonium salt is introduced at a level in the range of from about 0.005 phr, preferably from about 0.10 phr, to about 15 phr, preferably to about 1.5 phr. If the quaternary ammonium salt is introduced in the method of this invention in the form of one of its aforesaid adducts with the particles, carbon black or other filler, such adduct is introduced at a level such that the portion of the adduct contributed from the quaternary ammonium salt is introduced at a level of from about 0.005 phr, preferably from about 0.10 phr, to about 15 phr, preferably to about 1.5 phr.

Applicants prefer to use the quaternary in an amount less than about 1.5 phr because amounts above this can result in "bleed-out." This refers to the appearance of a waxy film on the vulcanizate surface when greater than 1.5 phr quaternary is used. Vulcanizates exhibiting the waxy film demonstrate inconsistent properties in that some are difficult to process and have lower tensile properties than those with less than 1.5 phr quaternary.

As developed in more detail in Examples 62-70 below, Applicants prefer to use sufficient quaternary to be about 1.6 to about 2.2 wt. %, and preferably about 1.9, wt. % of the kaolin. It is also preferred to mix this amount of quaternary salt with kaolin in a pretreatment stage to form the quaternary/clay adduct which is a convenient way to add these materials to the natural rubber. Using a constant wt. % of quaternary at any volume % of

clay used is preferred because this results in maintenance of equivalent properties to that of a purely black filled rubber at higher clay levels such as 40 vol. %.

Preparation of the rubber composition of this invention by the method of this invention can be effected by any mechanical mixing method which can accommodate the introduction of the quaternary ammonium salt and the particulate fillers. Whether the carbon black filler, non-carbon black filler and quaternary ammonium salt are introduced in the compounding process simultaneously or at different stages or whether as separate components or in the form of their various adducts as described hereinabove is generally a matter of convenience. In certain instances, for example, when the quaternary ammonium salt is difficult to disperse uniformly in the rubber, it is preferred to first form an adduct of it with either the carbon black or non-carbon black filler or both and then to disperse the adduct in the rubber.

In one suitable method of preparation, a batch of natural and/or synthetic rubber is initially mixed in a conventional internal mixer such as a Banbury mixer. As mixing proceeds, the temperature of the rubber increases. When the temperature reaches a temperature in the range of from about 40°C. to about 60°C., a metallic oxide, typically zinc oxide, at a level of from about 1 to about 10 phr, a fatty acid, typically stearic acid, at a level of from about 0.5 to about 5 phr, and an antiozonant, typically N-(1,3-dimethylbutyl)-N-phenyl-p-phenylene-diamine, at a level of from about 0.5 to about 7 phr, an antioxidant, typically polymerized 1,2-dihydro-2,2,4-tri-methylquinoline, at a level of from about 0.5 to 5 phr and a petroleum wax at a level of from about 0.5 to 5 phr are introduced into the rubber during mixing. In the alternative, the oxide, fatty acid, antiozonant, antioxidant and wax can be introduced initially with the rubber.

Mixing is then continued until the temperature of the mixing increases to a temperature in the range of from about 70°C. to about 80°C., at which point a softening agent, such as process oil, and the carbon black and non-carbon black particulate filler and quaternary ammonium salt are added.

Mixing is continued until the temperature of the mixture reaches about 80°C. to about 90°C. At this point the curing agent(s) is (are) added at a level of from about 1 to about 10 phr, and mixing is continued until the temperature reaches about 110°C. or for about a minute, whichever is shorter. Typical curing agents include sulfur and sulfur-donating materials (in combination with suitable accelerators commonly known in the art) and peroxides and other free radical producing systems.

The resulting mixture is then removed from the mixer and formed into a predetermined shape, for example, sheets. After storing overnight, the shaped mixture is cured, for example, by pressure molding at 160°C. for about a period of time corresponding to $T_c(90)$, as defined hereinafter.

In the alternative, a particulate adduct of either of the carbon black or non-carbon black filler particles and the quaternary ammonium salt can be formed in any suitable separate pretreatment step, and the resulting adduct, instead of the separate components from which the adduct is made, is introduced into the rubber in the above procedure. For example, one particulate adduct of the non-carbon black filler particles and the quaternary ammonium salt is prepared by agitating the mineral particles in a Littleford Brothers Model KM 130 Mixer. Then the quaternary salt component of the adduct to be made, diluted with a solvent such as isopropyl alcohol or process oil if desired, is sprayed through a nozzle into the agitated mineral particles, and the resulting mixture is stirred for about 15 minutes and is thereafter removed

from the mixer. Where a solvent is used, the necessary drying is performed at a temperature lower than the decomposition temperature of the quaternary salt when in the adduct. For example, the Adogen 470 used in the Examples should be dried at less than 80°C.

More simply, the quaternary ammonium salt is introduced into either the carbon black or non-carbon black filler or both and the mixture is blended in a dry blend mixer to a uniform consistency.

The following examples describe in detail compositions and methods illustrative of the present invention. It will be apparent to those skilled in the art that many modifications, both of materials and methods, may be practiced without departing from the purpose and intent of this disclosure.

EXAMPLES 1-43

To illustrate the method and natural rubber compositions of the invention, rubber formulations according to the ASTM-NR formulation but containing varying amounts of clay and a quaternary salt were made and vulcanized. The compositions also varied from the ASTM-NR by the addition of 1 phr plasticizer to aid processing in laboratory equipment. The starting material in each of Examples 1-43 contained 100 parts natural rubber, 50 parts ASTM N330 carbon black, and 1 part of the plasticizer Reogen™ (manufactured by R. T. Vanderbilt). The starting material was introduced into a Banbury mixer with 3 parts of stearic acid, 5 parts of zinc oxide and varying amounts of clay mixed with varying amounts of dimethyl ditallow ammonium chloride (Adogen 470, from Sherex), and mixing was continued for 5 minutes at a temperature below 300° F until the clay, salt, zinc oxide and stearic acid were fully incorporated into the rubber and the mixture appeared homogeneous. The control Examples without mineral and quaternary salt were mixed similarly. The amounts of clay added were on a volume % replacement of the carbon black basis. In the Examples with clay, it

was necessary to add additional natural rubber and Reogen to the particular Example's starting material, before addition of the clay to achieve 1 phr Reogen and the ASTM-NR formulation of 100 parts natural rubber. This was done by mixing the additional rubber and Reogen with the starting material before addition to the Banbury.

The master batch produced in the Banbury was removed, cooled, sheeted, cut into convenient pieces, and returned to the Banbury. Two and one-half parts sulfur and 0.6 parts Altax, an accelerator, were added and mixed for two minutes at 200° F. The final mix was transferred to a curing mold and cured at 160° C.

The clay and Adogen 470 were premixed before addition to the Banbury by spraying a 40 by weight % Adogen 470 in isopropyl alcohol solution containing the desired weight of Adogen onto desired amount of clay, and drying overnight at 70-80° C. The clay used was Windsor Clay from Aiken, South Carolina (available from Cyprus Industrial Minerals) with a median particle size of 0.5 micron and had been degritted to <1/2% on a 325 mesh screen. The amounts of quaternary ammonium salt and clay employed in each Example are shown in Table I.

The vulcanized products were tested by standard methods to determine their rheometric, static, dynamic, tear, hardness, rebound and flex fatigue properties, as described hereinbelow. The test methods which follow were also used in the Examples other than 1-43.

The rheometric data were obtained using ASTM test D-2084-75 with a 1° amplitude of oscillation of the test disk about its center position and at 320°F. and are presented in Table I. $M_L$ and $M_H$ represent the minimum torque and maximum torque, respectively. $T_{S2}$ represents the time to 2 units of torque increase above the minimum and is accepted as the scorch time. $T_c(10)$ and $T_c(90)$ represent the times to 10 and 90 percent, respectively, of full torque development, and $T_c(90)$ is accepted as the cure time.

The static properties were measured in accordance with ASTM test D-412-75 Method A, and the test results are presented in Table II. $E_u$ and $T_u$ represent the ultimate elongation and ultimate tensile strength, respectively. $T_{100}$, $T_{200}$, $T_{300}$ and $T_{400}$ represents the pounds per square inch developed at 100, 200, 300 and 400 percent elongation, respectively.

The dynamic properties when measured were made by using a Dynastat Viscoelastic Analyzer marketed by Imass, Inc. of Accord, Massachusetts. The test samples were each in the shape of a cylindrical button of 0.5-inch diameter and 0.375-inch height. The results are presented in Table III. The reported results were obtained at a frequency of 10 Hertz and at room temperature. M' represents the storage or elastic modulus, and M" represents the viscous or loss modulus. M' and M" are denoted and measured as E' and E" on the Dynastat Analyzer. Tan Delta is the quotient obtained by dividing M" by M'. Tan Delta is a property which is indicative of heat buildup with cyclical flexing and is an important characteristic in compositions for use as tire sidewall and tread stock. These dynamic properties can also be measured by other techniques known in the art.

The tear resistance properties were measured by a trouser tear test method and are reported in Table I. Reported in Table II are values for the Shore A Hardness, which was measured using ASTM test D-2240-75. Rebound D when measured was made using ASTM test D-2632. Fatigue when measured was made using the Monsanto Fatigue To Failure Tester and method.

TABLE I

| Example No. | 4° Salt (phr) | % CB Repl. | Tear-Rating | $T_{S2}$ (min.) | $T_c(10)$ (min.) | $T_c(90)$ (min.) |
|---|---|---|---|---|---|---|
| 1[a] | 0.0 | 0 | E | 2.5 | 2.65 | 10.8 |
| 2 | " | 5 | GE | 2.6 | 2.7 | 11.0 |
| 3 | " | 10 | G | 3.0 | 3.1 | 11.8 |
| 4 | " | 15 | G | 3.0 | 3.1 | 12.2 |
| 5 | " | 25 | FG | 2.7 | 2.8 | 12.2 |
| 6 | " | 50 | PF | 2.7 | 2.7 | 12.2 |
| 7 | " | 75 | P | 2.7 | 2.6 | 11.2 |
| 8 | " | 85 | P | 3.3 | 3.3 | 11.9 |
| 9 | " | 90 | P | 3.1 | 3.0 | 11.8 |
| 10 | " | 100 | P | 3.7 | 3.7 | 11.8 |
| 11[a] | 0 | 0 | G | 2.65 | 2.75 | 11.8 |
| 12 | 0.2 | 0 | GE | 1.6 | 2.0 | 7.5 |
| 13 | " | 5 | G | 2.0 | 2.1 | 7.6 |
| 14 | " | 10 | G | 2.0 | 2.1 | 7.9 |
| 15 | " | 15 | G | 1.9 | 2.0 | 7.6 |
| 16 | " | 25 | GE | 2.1 | 2.2 | 8.0 |
| 17 | " | 50 | GE | 2.3 | 2.4 | 9.5 |
| 18 | " | 75 | P | 2.8 | 2.8 | 9.6 |
| 19 | " | 85 | P | 3.4 | 3.4 | 11.9 |
| 20 | " | 90 | P | 3.7 | 3.6 | 12.1 |
| 21 | " | 100 | P | 4.8 | 4.3 | 17.1 |
| 22[a] | 0 | 0 | GE | 2.7 | 2.8 | 11.5 |
| 23 | 0.4 | 0 | GE | 1.7 | 1.8 | 6.3 |
| 24 | " | 5 | G | 1.6 | 1.8 | 6.2 |
| 25 | " | 10 | G | 1.8 | 1.9 | 6.2 |
| 26 | " | 15 | G | 1.8 | 1.9 | 6.4 |
| 27 | " | 25 | G | 1.8 | 1.9 | 6.3 |
| 28 | " | 50 | FG | 2.0 | 2.1 | 6.9 |
| 29 | " | 75 | P | 2.3 | 2.3 | 7.4 |
| 30 | " | 85 | P | 2.5 | 2.5 | 8.0 |
| 31 | " | 90 | P | 2.6 | 2.5 | 7.9 |
| 32 | " | 100 | P | 2.9 | 2.8 | 8.7 |

TABLE I (Cont'd.)

| Example No. | 4° Salt (phr) | % CB Repl. | Tear Rating | $T_{S2}$ (min.) | $T_c(10)$ (min.) | $T_c(90)$ (min.) |
|---|---|---|---|---|---|---|
| 33[a] | 0 | 0 | G | 2.6 | 2.7 | 11.6 |
| 34 | 0.6 | 0 | GE | 1.5 | 1.6 | 5.9 |
| 35 | " | 5 | E | 1.5 | 1.6 | 6.0 |
| 36 | " | 10 | G | 1.5 | 1.6 | 5.8 |
| 37 | " | 15 | G | 1.6 | 1.7 | 5.8 |
| 38 | " | 25 | G | 1.6 | 1.7 | 5.9 |
| 39 | " | 50 | G | 1.7 | 1.8 | 5.9 |
| 40 | " | 75 | F | 1.9 | 2.0 | 6.3 |
| 41 | " | 85 | P | 2.0 | 2.2 | 6.4 |
| 42 | " | 90 | P | 2.0 | 2.2 | 6.4 |
| 43 | " | 100 | P | 2.5 | 2.5 | 6.9 |

a) Average of two samples

E = Excellent
GE = Good to Excellent
G = Good
FG = Fair to Good
F = Fair
FP = Fair to Poor
P = Poor

TABLE II

| Example No. | % CB Repl. | $E_u$ (%) | $T_u$ (psi) | Shore A Hardness | $T_{300}$ (psi) |
|---|---|---|---|---|---|
| 1[a] | 0 | 460 | 2952 | 65 | 1662 |
| 2 | 5 | 469 | 2934 | 63 | 1551 |
| 3 | 10 | 466 | 2842 | 62 | 1492 |
| 4 | 15 | 490 | 2905 | 60 | 1426 |
| 5 | 25 | 506 | 3009 | 59 | 1355 |
| 6 | 50 | 526 | 3304 | 56 | 1336 |
| 7 | 75 | 551 | 3570 | 55 | 1290 |
| 8 | 85 | 534 | 3551 | 54 | 1271 |
| 9 | 90 | 513 | 3212 | 54 | 1268 |
| 10 | 100 | 513 | 3172 | 53 | 1161 |
| 11[a] | 0 | 438 | 2908 | 65 | 1803 |
| 12 | 0 | 439 | 3185 | 66 | 2001 |
| 13 | 5 | 462 | 3187 | 65 | 1839 |
| 14 | 10 | 453 | 3139 | 65 | 1820 |
| 15 | 15 | 476 | 3180 | 64 | 1684 |
| 16 | 25 | 487 | 3237 | 62 | 1618 |
| 17 | 50 | 524 | 3556 | 56 | 1520 |
| 18 | 75 | 544 | 3560 | 55 | 1310 |
| 19 | 85 | 527 | 3090 | 53 | 1161 |
| 20 | 90 | 512 | 2964 | 52 | 1149 |
| 21 | 100 | 507 | 2574 | 50 | 1028 |
| 22[a] | 0 | 472 | 3313 | 67 | 1892 |
| 23 | 0 | 448 | 3696 | 70 | 2308 |
| 24 | 5 | 429 | 3328 | 68 | 2173 |
| 25 | 10 | 462 | 3709 | 67 | 2144 |
| 26 | 15 | 472 | 3680 | 67 | 2050 |
| 27 | 25 | 496 | 3713 | 65 | 1836 |
| 28 | 50 | 546 | 3703 | 62 | 1481 |
| 29 | 75 | 541 | 3632 | 57 | 1357 |
| 30 | 85 | 524 | 3532 | 57 | 1389 |
| 31 | 90 | 535 | 3484 | 56 | 1292 |

TABLE II (Cont'd)

| Example No. | % CB Repl. | $E_u$ (%) | $T_u$ (psi) | Shore A Hard-ness | $T_{300}$ (psi) |
|---|---|---|---|---|---|
| 32 | 100 | 555 | 3406 | 55 | 1132 |
| 33[a] | 0 | 415 | 2790 | 65 | 1844 |
| 34 | 0 | 408 | 3412 | 70 | 2463 |
| 35 | 5 | 393 | 3328 | 70 | 2397 |
| 36 | 10 | 406 | 3272 | 70 | 2225 |
| 37 | 15 | 417 | 3513 | 67 | 2335 |
| 38 | 25 | 432 | 3376 | 67 | 2039 |
| 39 | 50 | 499 | 3698 | 64 | 1694 |
| 40 | 75 | 546 | 3901 | 60 | 1442 |
| 41 | 85 | 520 | 3662 | 60 | 1422 |
| 42 | 90 | 555 | 3754 | 59 | 1242 |
| 43 | 100 | 545 | 3787 | 57 | 1355 |

[a] Average of two samples.

Examples 1-10 are without any quaternary salt and show the ultimate tensile strength, $T_u$, is comparable to or higher than the carbon black control Ex. 1 for all % levels of kaolin replacement. The % elongation generally increased with kaolin concentration. However, modulus and the trouser tear showed a continuing decrease with higher levels of replacement.

Examples 11-21 add 0.2 phr quaternary salt to the same tests as in 1-10, with Example 11 a control without clay or salt and Example 12 a control without clay but with salt. Note that ultimate tensile strength is comparable to or higher than Example 11 or 12 up to about 90 vol. % clay. Significantly the $T_{300}$ modulus was greater or equal to that of Example 11 up to about 15 vol. % clay.

Examples 22-43 are the same as Examples 11-21 with higher quaternary salt levels - 0.4 phr in Examples 22-32 and 0.6 phr in Examples 33-43. The controls are Examples 22 and 33 (no kaolin or quaternary) and Examples 23 and 34 (no kaolin, but with quaternary). Note the tensile strength which was equal to or greater than the control throughout the range of clay added. At these higher levels of quaternary, the $T_{300}$ remained higher than the control Examples 22 and 33 up to about 15-25% and 25-50% clay added, respectively.

The trouser tear data indicate 0.2 and 0.4 phr quaternary gave acceptable ratings up to 50 vol. % clay. With 0.6 phr, acceptable ratings were up to 85 vol. % clay. The ultimate elongation generally increased with higher clay.

The rheometer data show scorch safety (inferred from $T_{S2}$) generally increased with increased Windsor clay levels regardless of quaternary level, but generally decreased with increasing quaternary. The optimum $T_{90}$ cure time behaved similarly.

Significantly, in all three series, 11-21, 22-32, and 33-43, the highest increase in $T_{300}$ modulus over the control Example 1 was seen in those Examples 12, 23, and 34, all without clay but with quaternary. These surprising results indicate the modulus enhancement results from a synergism or interaction between the carbon black and the quaternary. Applicants thus believe the quaternary salt is acting as a coupling agent for filler and rubber. The invention takes advantage of this interaction which results in higher modulus properties in natural rubber compositions.

## EXAMPLES 44-49

Examples 44-49 illustrate the properties of natural rubber vulcanizates comprising carbon black and varying amounts of a quaternary salt but without clay, and are used for comparison to the clay systems and to show the effect on tensile properties of different levels of the quaternary salt. The procedure used was as in Examples 1-43 except no clay was added with the quaternary salt. The rubber formulation was again the ASTM-NR varied only by addition of 1 phr Reogen. The amounts of

Adogen 470 added, and tensile, rheometric and trouser tear properties of the $T_{90}$ cured vulcanizates are shown in Table III and IV.

TABLE III

| Example | phr Adogen | $T_u$ (psi) | $T_{300}$ (psi) | $E_u$ (%) |
|---|---|---|---|---|
| 44 | 0.0 | 2805 | 1846 | 416 |
| 45 | 0.1 | 2988 | 2016 | 411 |
| 46 | 0.3 | 3314 | 2244 | 422 |
| 47 | 0.6 | 3538 | 2510 | 412 |
| 48 | 0.8 | 3456 | 2525 | 397 |
| 49 | 1.0 | 3430 | 2557 | 390 |

TABLE IV[a]

| Example | phr Adogen | $T_{S2}$ (min) | $T_{90}$ (min) | Maximum tear (ppi) | Tear Rating |
|---|---|---|---|---|---|
| 44 | 0.0 | 2.5 | 11.6 | 31.0 | F-G |
| 45 | 0.1 | 2.2 | 8.8 | 26.6 | F-G |
| 46 | 0.3 | 1.8 | 6.6 | 19.8 | G |
| 47 | 0.6 | 1.5 | 5.7 | 20.6 | G-E |
| 48 | 0.8 | 1.3 | 5.3 | 26.3 | G-E |
| 49 | 1.0 | 1.2 | 5.0 | 21.9 | G-E |

a) All data is average of two samples

Examples 44-49 first show the beneficial effect on $T_{300}$ modulus for carbon black filled natural rubber which increased substantially with quaternary concentration up to 0.6 phr over that of control No. 44. From 0.6 to 1.0 phr, the $T_{300}$ was relatively constant. In a similar manner, the ultimate tensile strength also increased up to 0.6 phr quaternary and remained relatively constant above 0.6 phr. As is usually observed with rubber compositions, the ultimate elongation decreased as $T_{300}$ increased. The trouser tear rating increased with quaternary increase. These results show the responsiveness

of natural rubber to a quaternary salt coupling agent.

EXAMPLES 50-61

Examples 50-61 are for comparison of the natural rubber compositions of this invention to similar compositions in styrene butadiene rubber. The ASTM-SBR formulation of 100 parts SBR, 50 parts N330 carbon black, 1 part stearic acid, 3 parts zinc oxide, 1.75 parts sulfur, and 1 part Santocure NS (from Monsanto) was used. The mixing procedure was as set out for Examples 1-43 except that only additional SBR, and no Reogen, was added to the examples which contained clay to maintain the ASTM-SBR formula. Adogen 470 at a level of 0.6 phr and varying amounts of the above Windsor Clay were used. Table V shows the volume % clay used, $T_{300}$ modulus, $E_u$, and $T_u$.

TABLE V

| Example | Vol. % Replacement | $T_u$ (psi) | $T_{300}$ (psi) | $E_u$ (%) |
|---|---|---|---|---|
| 50 | 0 | 3818 | 2413 | 420 |
| 51 | 0 | 3766 | 2462 | 411 |
| 52 | 0 | 3859 | 2822 | 380 |
| 53 | 5 | 4053 | 2558 | 420 |
| 54 | 10 | 4015 | 2449 | 431 |
| 55 | 15 | 3719 | 2228 | 433 |
| 56 | 25 | 3810 | 1943 | 463 |
| 57 | 50 | 3708 | 1193 | 544 |
| 58 | 75 | 3187 | 672 | 604 |
| 59 | 85 | 3202 | 567 | 635 |
| 60 | 90 | 3071 | 532 | 641 |
| 61 | 100 | 1952 | 462 | 629 |

Figures 1 and 2 are plots of $T_{300}$ modulus versus Vol. % of clay for Examples 33-43 and Examples 50-61, respectively, and more easily illustrate the increased effectiveness of a quaternary ammonium salt in natural rubber compared to styrene-butadiene rubber. The Figures show that the increment of modulus increase in natural

rubber from the quaternary salt is greater than about one and one half times that in SBR. Furthermore, at 0.6 phr quaternary, $T_{300}$ equivalent to or higher than the control can only be maintained in SBR up to about 10% clay replacement, but in natural rubber can be maintained up to about 40% clay. The comparisons with the Figures illustrate the unobvious and much greater effect of a quaternary salt in natural rubber.

## EXAMPLES 62-70

Examples 62-70 are tests of a natural rubber composition containing Windsor clay and Adogen 470 in an amount of 1.9 wt. % of the clay. The 1.9 wt % quaternary was chosen because it is calculated to be an amount sufficient to maintain $T_{300}$ constant over a broad range of volume % clay. It was calculated as follows.

Using the data from Examples 1-43, a plot was made of highest vol. % of clay which had a vulcanizate $T_{300}$ modulus equal to that of the appropriate carbon black control (without Adogen) versus phr Adogen used. A best fit straight line was then drawn through the plotted points and the origin point (0 vol. %, 0 phr Adogen). The line goes through the origin because for each increase in clay, which is less reinforcing than carbon black and decreases $T_{300}$ - see Examples 1-10, an amount of Adogen appropriate to maintain $T_{300}$ constant must also be added. In other words, the loss in modulus from the less reinforcing clay is offset by the quaternary salt's effect. From the slope of the plotted line, the concentration of quaternary can be calculated, and for a $T_{90}$ cure is 1.9 wt. %.

Examples 62 - 70 were then performed as in Examples 1-43. The natural rubber, quaternary, clay, and carbon black vulcanizates were tested for rheometric and tensile properties, trouser tear, Mooney visconsity, fatigue to failure, ozone-humidity exposure and dynamic mechanical analysis. The tests results follow in

TABLES VI - X.

TABLE VI

| Example | Vol. % Repl. | Tu (psi) | $T_{300}$ (psi) | Eu (%) | $Ts_2$ (min.) | $T_{90}$ (min.) |
|---|---|---|---|---|---|---|
| 62 | 0 | 2148 | 1567 | 377 | 2.7 | 9.6 |
| 63 | 15 | 3059 | 1724 | 457 | 2.1 | 6.8 |
| 64 | 25 | 3448 | 1811 | 477 | 1.8 | 6.1 |
| 65 | 35 | 3587 | 1946 | 461 | 1.6 | 5.6 |
| 66 | 45 | 3625 | 1714 | 496 | 1.5 | 5.3 |
| 67 | 55 | 3658 | 1775 | 487 | 1.4 | 5.0 |
| 68 | 70 | 3667 | 1660 | 498 | 1.4 | 4.9 |
| 69 | 85 | 3734 | 1475 | 523 | 1.3 | 4.6 |
| 70 | 100 | 4259 | 1397 | 550 | 1.4 | 4.5 |

TABLE VII

| Example | Vol. % Repl. | Trouser Tear Max (pps) | Trouser Tear Rating | Fatigue to Failure (No. Cycles) | Mooney Viscosi |
|---|---|---|---|---|---|
| 62 | 0 | 10.4 | GE | 157 | 19. |
| 63 | 15 | 28.2 | G | 99 | 19. |
| 64 | 25 | 20.0 | G | 84 | 23. |
| 65 | 35 | 32.5 | G | 75 | 21. |
| 66 | 45 | 20.1 | G | 62 | 24. |
| 67 | 55 | 21.1 | G | 52 | 27. |
| 68 | 70 | 7.3 | G | 40 | 26. |
| 69 | 85 | 5.8 | G | 50 | 31. |
| 70 | 100 | 4.2 | FP | 56 | 30. |

TABLE VIII

| Example | Vol. % Repl. | TAN DELTA @ 10 HZ | MAXIMUM TAN DELTA |
|---|---|---|---|
| 62 | 0 | .1683 | .1683 @ 10 HZ |
| 63 | 15 | .1363 | .1398 @ 50.1 HZ |
| 64 | 25 | .1149 | .1190 @ 50.1 HZ |
| 65 | 35 | .1014 | .1076 @ 63.1 HZ |
| 66 | 45 | .0935 | .0994 @ 50.1 HZ |
| 67 | 55 | .0825 | .0877 @ 63.1 HZ |
| 68 | 70 | .0705 | .0747 @ 63.1 HZ |
| 69 | 85 | .0644 | .0668 @ 63.1 HZ |
| 70 | 100 | .0484 | .0541 @ 50.1 HZ |

TABLE IX

| Example | % Replacement (by volume) | Ozone[a] Exposure | Compression Set (%) |
|---|---|---|---|
| 62 | 0 | 3 | 86 |
| 63 | 15 | 3 | 90 |
| 64 | 25 | 2 | 86 |
| 65 | 35 | 2 | 87 |
| 66 | 45 | 2 | 91 |
| 67 | 55 | 2 | 87 |
| 68 | 70 | 2 | 84 |
| 69 | 85 | 2 | 82 |
| 70 | 100 | 1 | 83 |

a) Visual Rating on 0-4 scale with 4 as most severe cracking.

Average of 2 samples tested for all replacement levels.

Exposure to 0.5 ppm ozone for 24 hours at 80°F.

TABLE X

HUMIDITY TESTING[a]

| Example | Vol. % Repl. | $T_u$ (psi) | Modulus $T_{100}$ | Modulus $T_{200}$ | Modulus $T_{300}$ | $E_u$ (%) |
|---|---|---|---|---|---|---|
| 62 | 0 | 1150 | 481 | 1145 | - | 207 |
| 63 | 15 | 1490 | 521 | 1221 | - | 238 |
| 64 | 25 | 1772 | 565 | 1273 | - | 265 |
| 65 | 35 | 1906 | 606 | 1300 | - | 275 |
| 66 | 45 | 2053 | 569 | 1173 | 1912 | 320 |
| 67 | 55 | 2088 | 645 | 1234 | 1920 | 310 |
| 68 | 70 | 2198 | 759 | 1377 | - | 298 |
| 69 | 85 | 2451 | 739 | 1205 | 1928 | 358 |
| 70 | 100 | 2610 | 712 | 1024 | 1574 | 413 |

[a] Exposure to 95% relative humidity at 82°C for 7 days.

Figure 3 is a plot of the $T_{300}$ modulus versus vol. % clay. The plot shows that up to about 80 volume % clay, the $T_{300}$ modulus remains at least equal to the $T_{300}$ of the carbon black control No. 62 when quaternary in an amount of 1.9 wt% of the clay is used. Figure 3 also illustrates that natural rubber is preferred in the invention, because modulus is maintained at high clay levels. In contrast quaternary in an amount of 8.7 wt.% of the clay is calculated (as above) to maintain equal modulus in styrene butadiene rubber. Tests in SBR like Ex. 62-70 with 8.7 wt.% Adogen showed, however, that equal modulus was maintained up to only about 12 volume % clay in SBR.

Examples 62 - 70 also show the preferred amount of up to about 40 vol. % clay. First, up to 40% replacement, the ultimate tensile strength, tensile modulus, ultimate elongation, humidity resistance, loss tangent and rebound of the vulcanizates all exceed these properties of the purely black filled control No. 62. Having all these properties exceed those of the black filled control is surprising and unexpected because in the control examples 1-10 the addition of the mineral caused decreases in important properties like modulus. Second, the trouser tear, hardness, Mooney viscosity, fatigue resistance, ozone exposure and compression set all are equivalent to control 62.

These Examples illustrate that a rubber made by mechanically mixing in a rubber comprising natural rubber (1) carbon black, (2) a reinforcing mineral of kaolin or metakaolin, and (3) a coupling agent consisting of a quaternary ammonium salt, has improved properties compared to pure black filled rubbers. The combination filler of carbon black, clay, and quaternary shows a high degree of rubber reinforcement at significant levels of clay. In addition, these rubbers are cost effective because of clay's much lower cost compared to the carbon black it replaces.

EXAMPLE 71

Example 71 shows the difference between the natural rubber compositions of this invention and the powdered rubber produced by the precipitation method of Berg, et al., U. S. 3,998,778. Berg's rubbers are formed by precipitation from a sodium silicate solution and contains silicate as an unavoidable ingredient. Applicant's natural rubber uses a mineral filler consisting essentially of kaolin and metakaolin.

Example I of Berg was duplicated as follows. Initially, 1000 g. of a 10 wt.% polybutadiene solution in hexane was prepared. This mixture was defined as solution A. Six grams of 50 wt. % cetyltrimethyl ammonium chloride and 5g. of 10 wt. % sulfuric acid were added to one liter water; this mixture, defined as solution B, was stirred for about 10 minutes.

Solution A was added to solution B and emulsified utilizing an ultrasonic unit. Then, 1000 g. of a 5 wt.% aqueous suspension of N550 carbon black was added to the emulsified mixture, followed by further treatment with the ultrasonic unit.

A separate solution was prepared by adding 45 g. of a 26 wt. % sodium silicate solution to a kettle containing 4-1/2 liters of distilled water. The contents of the kettle were stirred and heated to 80-90°C at which point the emulsified carbon black/polymer mixture was added slowly. Hexane was allowed to distill off. After cooling overnite, the contents were filtered and the residue collected.

Gravimetric analysis of the product rubber showed that it contained 4.96 grams silicon expressed as $SiO_2$, or 53% of the original 9.29 grams of silicate in the aqueous solution. Analysis of the leftover solution by atomic absorption spectroscopy for a material balance showed 4.53 grams silicon expressed as $SiO_2$, or 49%. Thus, all rubber compositions produced by the method of Berg contain silicate of about 5 phr expressed as $SiO_2$.

EXAMPLES 72-80

U.S. 3,627,723, Kealy, discloses use of surfactants in carbon black and mineral filled rubbers made from a co-polymer of an α-olefin and a non-conjugated diene. To illustrate the differences between Kealy's three surfactant classes in rubber compositions other than those claimed in Kealy, rubber formulations each containing only one surfactant were vulcanized and the vulcanized rubber composition properties were measured. The surfactants used included one from each of the Kealy classes, and were Siponate 330--alkyl benzene sulfonate salt (anionic); Adogen 470--dimethylditallow ammonium chloride (cationic); and Lonzest SMP--sorbitan monopalmitate (non-ionic). Table XI lists the formulation amounts in phr of the components in each rubber composition. The compositions in Table XI started with a masterbatch,

called CIM 11, which was formulated in a ratio of 100 parts styrene-butadiene rubber (SBR) to 80 parts N330 carbon black. To the CIM 11 was added sufficient SBR (SBR 1502) to produce a carbon black level of 50 phr. The compositions in Table XI did not contain mineral filler. The stearic acid, ZIC Stick (a form of zinc oxide), sulfur and Santocure NS are conventional rubber components added for vulcanization.

The rubber mixing procedure was that all components but the sulfur and Santocure NS were mixed in a Banbury mixer at a starting temperature of about 300°F for 5 minutes. A portion of this mixture was removed and the sulfur and Santocure NS were rolled up in the middle. This portion was then returned to the Banbury mixer and mixed for 2 minutes. The final temperatures varied depending upon the sample from 235°F to 245°F.

Table XI

| | Example No. | | | |
|---|---|---|---|---|
| Component | 72 | 73 | 74 | 75 |
| SBR 1502 | 37.5 | 37.5 | 37.5 | 37.5 |
| CIM II | 112.5 | 112.5 | 112.5 | 112.5 |
| Stearic Acid | 1 | 1 | 1 | 1 |
| ZIC Stick | 3 | 3 | 3 | 3 |
| Adogen 470 | -- | 2.31 | ---- | |
| Siponate 330 | -- | -- | 1.5 | -- |
| Lonzest SMP | -- | -- | -- | 1.5 |
| Sulfur | 1.75 | 1.75 | 1.75 | 1.75 |
| Santocure NS | 1 | 1 | 1 | 1 |
| | | | | |
| phr Carbon Black | 50 | 50 | 50 | 50 |
| phr Adogen 470 | -- | 1.5 | -- | -- |
| phr Siponate 330 | -- | -- | 1.5 | -- |
| phr Lonzest SMP | -- | -- | -- | 1.5 |
| | | | | |
| St. Temp. °F | 298 | 293 | 295 | 304 |

| | | | | |
|---|---|---|---|---|
| Final Temp. °F | 245 | 236 | 238 | 235 |
| $T_{90}$ Time min. | 18.2 | 14.0 | 14.0 | 19.0 |

The rubber compositions were vulcanized to a $T_{90}$ cure, and the $T_{300}$ modulus property ($M_{300}$ in Kealy), $T_S2$ cure rate and trouser tear rating were measured. Table XII lists the properties of the vulcanized rubbers.

Table XII

| Property | 72 | 73 | 74 | 75 |
|---|---|---|---|---|
| $T_{300}$ | 3156 | 3618 | 3037 | 2856 |
| Trouser Tear Rating | Poor | Good | Fair | Fair |
| $T_S2$ Min. | 6.8 | 3.3 | 6.4 | 7.1 |

Comparing the $T_{300}$ moduli, it is readily seen that only Example 73 with the cationic surfactant, which is a quaternary ammonium salt claimed by Applicant, improved the $T_{300}$ over that of the control Example 72. From the cure rate, only the quaternary salt strongly accelerated cure rate. The quaternary salt also produced a better trouser tear rating than the other two surfactants. These superior effects and differences of cationic quaternary ammonium salts are not disclosed by Kealy since the surfactant classes are taught as equivalent with the Kealy rubber. See the $M_{300}$ modulus properties in Table V of the Kealy examples which shows virtually identical behavior.

Additional tests were made of SBR rubber compositions containing the different surfactants, carbon black and clay at 15 vol. % replacement of carbon black. Rubbers filled with clay were selected and tested since the Kealy examples all used clay/carbon black filler mixtures. These tests were run with a different starting masterbatch (SBR 1601) containing 100 parts SBR and 50 parts N330 black. The clay used was the above Windsor clay. Table XIII lists the formulation details with Example 76 the control sample without mineral or surfactant and Example 75 the control sample without surfactant but with mineral. The mixing procedure was the same as above except that the sulfur and Santocure NS were mixed into the small portion on a small mill, and the final mix period was only 1 minute.

Table XIII

| | Example No. | | | | |
|---|---|---|---|---|---|
| Component | 76 | 77 | 78 | 79 | 80 |
| SBR 1502 | -- | 15 | 15 | 15 | 15 |
| SBR 1601 | 150 | 127.5 | 127.5 | 127.5 | 127.5 |
| Stearic Acid | 1 | 1 | 1 | 1 | 1 |
| ZIC Stick | 3 | 3 | 3 | 3 | 3 |
| Clay | -- | 11.0 | 11.0 | 11.0 | 11.0 |
| Adogen 470 | -- | -- | 2.31 | -- | -- |
| Lonzest SMP | -- | -- | -- | -- | 1.5 |
| Siponate 330 | -- | -- | -- | 1.5 | -- |
| Sulfur | 1.75 | 1.75 | 1.75 | 1.75 | 1.75 |
| Santocure NS | 1 | 1 | 1 | 1 | 1 |
| N330 | 50 | 42.5 | 42.5 | 42.5 | 42.5 |
| % Replacement | -- | 15 | 15 | 15 | 15 |
| phr Adogen | -- | -- | 1.5 | -- | -- |
| phr Siponate 330 | -- | -- | -- | 1.5 | -- |
| phr Lonzest SMP | -- | -- | -- | -- | 1.5 |
| St. Temp. $^{o}F$ | 300 | 300 | 300 | 295 | 300 |
| Final Temp. $^{o}F$ | 240 | 252 | 256 | 262 | 270 |
| $T_{90}$ Cure min. | 16.0 | 15.2 | 8.7 | 13.6 | 15.8 |

Table XIV lists the $T_{300}$, $T_S2$ cure rate and the trouser tear rating of each sample.

Table XIV

| | Example No. | | | | |
|---|---|---|---|---|---|
| Property | 76 | 77 | 78 | 79 | 80 |
| $T_{300}$ | 2340 | 1860 | 2197 | 1946 | 1765 |
| Trouser Tear | Good | Good | Good | Good | Good |
| $T_S2$ min. | 6.5 | 5.6 | 2.9 | 6.2 | 6.7 |

These results show that the quaternary ammonium salt provided substantially greater $T_{300}$ modulus than the control #77. The other surfactant classes of Kealy provided less modulus improvement (#79) over the control #77 or worse modulus (#80) than the control #77. The quaternary salt again strongly accelerated cure rate while the others had much less effect on the cure rate. The trouser tear ratings were all the same.

The above tests show the unobvious and superior effects of a quaternary salt when used in filled rubbers different than in Kealy, since in contrast, the modulus properties in the Kealy examples show little variation between his three classes of surfactant. Although these examples used styrene butadiene rubber, similar results are believed to occur if the other two surfactant classes were tested in natural rubber. The basis of this belief is that both anionic and nonionic were ineffective in SBR while quaternary does improve SBR modulus significantly, although not as much as in natural rubber. Thus, even if the anionic and nonionic are effective in natural rubber, their effect would be much less the quaternary effect.

From the above description it is apparent that while only certain embodiments have been set forth, alternative embodiments and various modifications will be apparent from the above description to those skilled in the art. These and other alternatives are considered equivalents and within the spirit and scope of the present invention.

Having described the invention, what is claimed is:

1. A method of compounding rubber comprising mechanically mixing and substantially uniformly dispersing the following materials in a rubber comprising natural rubber in an amount of at least about 5% of the rubber:

A. 1. particulate Agent G selected from the group consisting of kaolin and metakaolin and having a median particle size in the range of from about 0.01 to about 20 microns,

A. 2. particulate carbon black having a median particle size in the range of from about 0.001 to about 20 microns, and

A. 3. a coupling agent consisting essentially of a quaternary ammonium salt at a level of from about 0.005 to about 15 phr; or

B. 1. a particulate adduct of Agent G and a coupling agent consisting essentially of the quaternary ammonium salt, having a median particle size in the range of from about 0.01 to about 20 microns and present at a level such that the portion thereof contributed from the quaternary ammonium salt is at a level of from about 0.005 to about 15 phr, and

B. 2. the particulate carbon black; or

C. 1. a particulate adduct of the particulate carbon black and a coupling agent consisting essentially of the quaternary ammonium salt, having a median particle size in the range of from about 0.001 to about 20 microns and present at a level such that the portion thereof contributed from the quaternary ammonium salt is at a level of from about 0.005 to about 15 phr, and

C. 2. particulate Agent G; or

D. 1. a particulate adduct of Agent G and a coupling agent consisting essentially of the quaternary ammonium salt having a median particle size in the range of from about 0.01 to about 20 microns and present at level such that the portion thereof

contributed from the quaternary ammonium salt is at a level of from about 0.005 to about 15 phr, and

D. 2. a particulate adduct of the carbon black and a coupling agent consisting essentially of the quaternary ammonium salt having a median particle size in the range of from about 0.001 to about 20 microns and present at a level such that the portion thereof contributed from the quaternary ammonium salt is at a level of from about 0.005 to about 15 phr;

wherein the combined contents of (1) Agent G or the portion of the aforesaid adduct contributed from Agent G and (2) the carbon black or the portion of the aforesaid adduct contributed from the carbon black are in the range of from about 5 to about 400 phr and the weight ratio of (1) Agent G or the portion of the aforesaid adduct contributed from Agent G -to- (2) the carbon black or the portion of the aforesaid adduct contributed from the carbon black is in the range of from about 1:19 to about 9:1.

2. The method of Claim 1 wherein the combined contents of (1) Agent G or the portion of the adduct contributed from Agent G and (2) the carbon black or the portion of the adduct contributed from the carbon black are in the range of from about 30 to about 120 phr.

3. The method of Claim 1 wherein the weight ratio of (1) Agent G or the portion of the adduct contributed from Agent G -to- (2) the carbon black or the portion of the adduct contributed from the carbon black is in the range of from about 1:19 to about 1:1.

4. The method of Claim 1 wherein the natural rubber comprises at least about 30% of the rubber.

5. The method of Claim 1 wherein the quaternary ammonium salt and the portion of each of the adducts contributed from the quaternary ammonium salt are each at a level of from about 0.10 to about 1.5 phr.

6. The method of Claim 1 wherein the quaternary ammonium salt has a structure of formula I, II, III, IV or V:

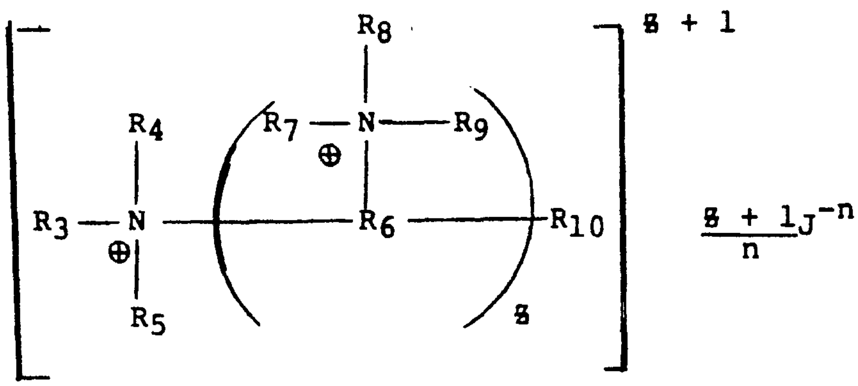

$\frac{z+1}{n} J^{-n}$ (I)

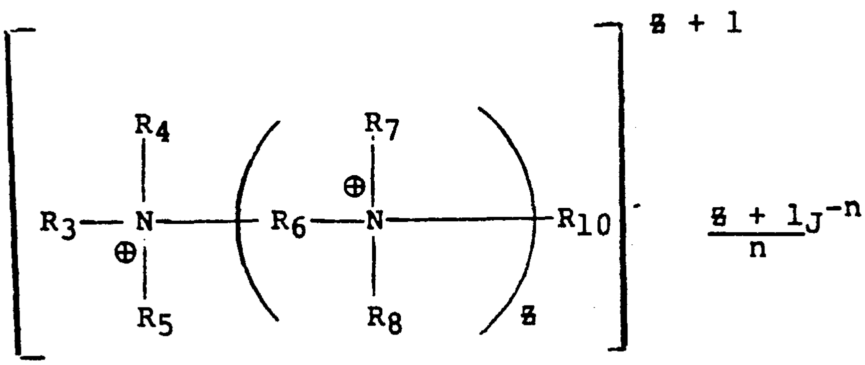

$\frac{z+1}{n} J^{-n}$ (II)

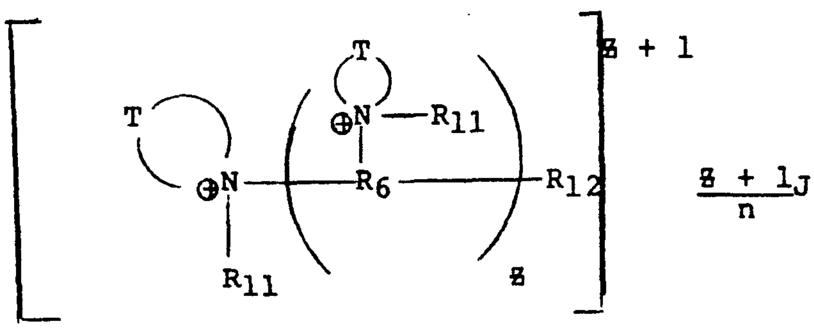

$\frac{z+1}{n} J^{-n}$ (III)

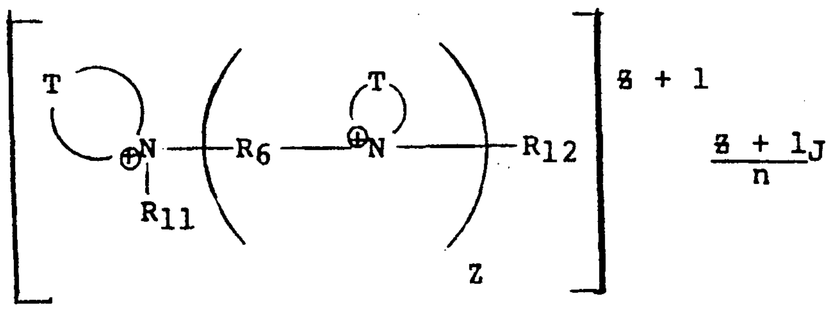

$\frac{z+1}{n} J^{-n}$ (IV)

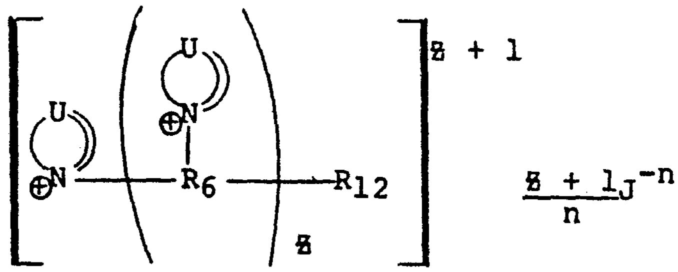 (V)

wherein Z is zero or a positive integer from 1 to 100, J is an anionic radical, n is the absolute value of the oxidation state of J, and $R_6$ is an alkylenyl radical containing from 2 to 20 carbon atoms or an aryl radical containing from 6 to 14 carbon atoms,

wherein formulas I and II, $R_3$, $R_4$, $R_5$, $R_7$, $R_8$ and $R_9$ are the same or different and are each selected from the group consisting of: aliphatic radicals containing a total of from 1 to 3 carbon atoms which are saturated or unsaturated and unsubstituted or substituted with at least one hydroxy or alkoxy group; aliphatic radicals containing a total of from 8 to 40 carbon atoms which are saturated or unsaturated and unsubstituted or substituted with at least one hydroxy, alkoxy or polyalkoxy group; aryl radicals containing from 6 to 18 carbon atoms; and saturated and unsaturated araliphatic radicals containing a total of from 7 to 48 carbon atoms,

wherein formulas I and II, when Z is zero, $R_{10}$ is selected from the group consisting of the groups described by $R_3$, $R_4$, $R_5$, $R_7$, $R_8$ and $R_9$, and when Z is a positive integer, $R_{10}$ is selected from the group consisting of the groups described by $R_3$, $R_4$, $R_5$, $R_7$, $R_8$ and $R_9$ and a hydrogen atom,

wherein formulas I and II, (1) at least one of $R_3$, $R_4$, $R_5$, $R_7$, $R_8$, $R_9$ and $R_{10}$ is an aliphatic radical containing a total of from 1 to 3 carbon atoms and (2) either (a) at least one of $R_3$, $R_4$, $R_5$, $R_7$, $R_8$, $R_9$ and $R_{10}$ is an aliphatic radical containing at least 12 carbon

atoms, or (b) at least two of $R_3$, $R_4$, $R_5$, $R_7$, $R_8$, $R_9$ and $R_{10}$ are aliphatic radicals containing at least 8 carbon atoms,

wherein formulas III, IV, and V, each of T and U is a radical which, in conjunction with each nitrogen atom to which it is shown attached in formula III, IV or V, forms a heterocyclic radical containing at least one nitrogen atom in the ring system and containing only nitrogen and carbon atoms in the ring system, and the T and U portions of the ring system are unsubstituted or substituted by at least one alkyl group with the total number of ring substitutents on each of T and U being from 1 to 32 carbon atoms,

wherein formulas III and IV, $R_{11}$ is selected from the group consisting of the groups described by $R_3$, $R_4$, $R_5$, $R_7$, $R_8$ and $R_9$ and alkylamidoalkyl or alkylesteralkyl groups containing a total of at least 14 carbon atoms, and

wherein formulas III, IV and V, when Z is zero, $R_{12}$ is selected from the group consisting of the groups described by $R_{11}$, and when Z is a positive integer, $R_{12}$ is selected from the group consisting of the groups described by $R_{11}$ and a hydrogen atom.

7. The method of Claim 6 wherein formulas I and II, at least one of $R_3$, $R_4$, $R_5$, $R_7$, $R_8$, $R_9$, $R_{10}$, $R_{11}$ and $R_{12}$ is a methyl radical, and wherein at least one of $R_3$, $R_4$, $R_5$, $R_7$, $R_8$, $R_9$, $R_{10}$, $R_{11}$ and $R_{12}$ is an aliphatic radical containing from 12 to 22 carbon atoms.

8. The method of Claim 7 wherein Z is zero or 1.

9. The method of Claim 1 wherein kaolin is used in an amount of about 5 to about 40 volume % of the carbon black, and the amount of quaternary ammonium salt is about 1.6 to 2.2 weight % of the kaolin.

10. A rubber composition comprising a substantially uniform dispersion of the following materials in rubber:

A. 1. a particulate Agent G selected from the group consisting of kaolin and metakaolin and having

a median particle size in the range of from about 0.01 to about 20 microns,

A. 2. particulate carbon black having a median particle size in the range of from about 0.001 to about 20 microns, and

A. 3. a coupling agent consisting essentially of a quaternary ammonium salt at a level of from about 0.005 to about 15 phr; or

B. 1. a particulate adduct of Agent G and a coupling agent consisting essentially of the quaternary ammonium salt, having a median particle size in the range of from about 0.001 to about 20 microns and present at a level such that the portion thereof contributed from the quaternary ammonium salt is at a level of from about 0.005 to about 15 phr, and

B. 2. the particulate carbon black; or

C. 1. a particulate adduct of the particulate carbon black and a coupling agent consisting essentially of the quaternary ammonium salt, having a median particle size in the range of from about 0.001 to about 20 microns and present at a level such that the portion thereof contributed from the quaternary ammonium salt is at a level of from about 0.005 to about 15 phr, and

C. 2. particulate Agent G; or

D. 1. a particulate adduct of Agent G and a coupling agent consisting essentially of the quaternary ammonium salt having a median particle size in the range of from about 0.01 to about 20 microns and present at level such that the portion thereof contributed from the quaternary ammonium salt is at a level of from about 0.005 to about 15 phr, and

D. 2. a particulate adduct of the carbon black and a coupling agent consisting essentially of the quaternary ammonium salt having a median particle size in the range of from about 0.001 to about 20 microns and present at a level such that the portion thereof contributed from the quaternary ammonium salt is at a level of from about 0.005 to about 15 phr; or

E. B, C or D above wherein the particulate adduct in B or C or at least one of the particulate adducts in D is also an adduct with the rubber;

wherein the combined contents of (1) Agent G or the portion of the aforesaid adduct contributed from Agent G and (2) the carbon black or the portion of the aforesaid adduct contributed from the carbon black are in the range of from about 5 to about 400 phr and the weight ratio of (1) Agent G or the portion of the aforesaid adduct contributed from Agent G -to- (2) the carbon black or the portion of the aforesaid adduct contributed from the carbon black is in the range of from about 1:19 to about 9:1.

11. The composition of Claim 10 wherein the median particle size of Agent G and of the adduct containing Agent G is in the range of from about 0.1 to about 5 microns, and the median particle size of of the carbon black and of the adduct containing the carbon black is in the range of from about 0.001 to about 1 micron.

12. The composition of Claim 10 wherein the combined contents of (1) Agent G or the portion of the adduct contributed from Agent G and (2) the carbon black or the portion of the adduct contributed from the carbon black are in the range of from about 30 to about 120 phr.

13. The composition of Claim 10 wherein the weight ratio of (1) Agent G or the portion of the adduct contributed from Agent G -to- (2) the carbon black or the portion of the adduct contributed from the carbon black is in the range of from about 1:19 to about 1:1.

14. The composition of Claim 10 wherein the quaternary ammonium salt and the portion of each of the adducts contributed from the quaternary ammonium salt are each at a level of from about 0.10 to about 1.5 phr.

15. The composition of Claim 10 wherein the quaternary ammonium salt has a structure of formula I:

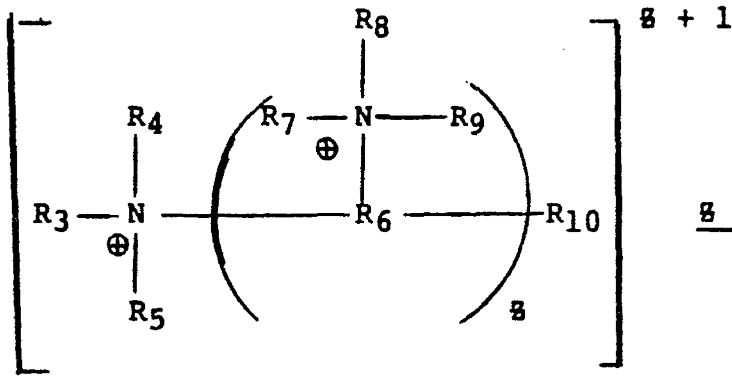

$\frac{Z+1}{n}J^{-n}$ (I)

wherein Z is zero or a positive integer from 1 to 100, J is an anionic radical, n is the absolute value of the oxidation state of J, and $R_6$ is an alkylenyl radical containing from 2 to 20 carbon atoms or an aryl radical containing from 6 to 14 carbon atoms,

wherein $R_3$, $R_4$, $R_5$, $R_7$, $R_8$ and $R_9$ are the same or different and are each selected from the group consisting of: aliphatic radicals containing a total of from 1 to 3 carbon atoms which are saturated or unsaturated and unsubstituted or substituted with at least one hydroxy or alkoxy group; aliphatic radicals containing a total of from 8 to 40 carbon atoms which are saturated or unsaturated and unsubstituted or substituted with at least one hydroxy, alkoxy or polyalkoxy group; aryl radicals containing from 6 to 18 carbon atoms; and saturated and unsaturated araliphatic radicals containing a total of from 7 to 48 carbon atoms,

wherein, when Z is zero, $R_{10}$ is selected from the group consisting of the groups described by $R_3$, $R_4$, $R_5$, $R_7$, $R_8$ and $R_9$, and when Z is a positive integer, $R_{10}$ is selected from the group consisting of the groups described by $R_3$, $R_4$, $R_5$, $R_7$, $R_8$ and $R_9$ and a hydrogen atom, and

wherein (1) at least one of $R_3$, $R_4$, $R_5$, $R_7$, $R_8$, $R_9$ and $R_{10}$ is an aliphatic radical containing a total of

from 1 to 3 carbon atoms and (2) either (a) at least one of $R_3$, $R_4$, $R_5$, $R_7$, $R_8$, $R_9$ and $R_{10}$ is an aliphatic radical containing at least 12 carbon atoms, or (b) at least two of $R_3$, $R_4$, $R_5$, $R_7$, $R_8$, $R_9$ and $R_{10}$ are aliphatic radicals containing at least 8 carbon atoms.

16. The composition of Claim 15 wherein in each of formulas I, II, III, IV and V, at least one of $R_3$, $R_4$, $R_5$, $R_7$, $R_8$, $R_9$, $R_{10}$, $R_{11}$ and $R_{12}$ is a methyl radical, and at least one of $R_3$, $R_4$, $R_5$, $R_7$, $R_8$, $R_9$, $R_{10}$, $R_{11}$ and $R_{12}$ is an aliphatic radical containing from 12 to 22 carbon atoms.

17. The composition of Claim 16 wherein Z is zero.

FIG. 1

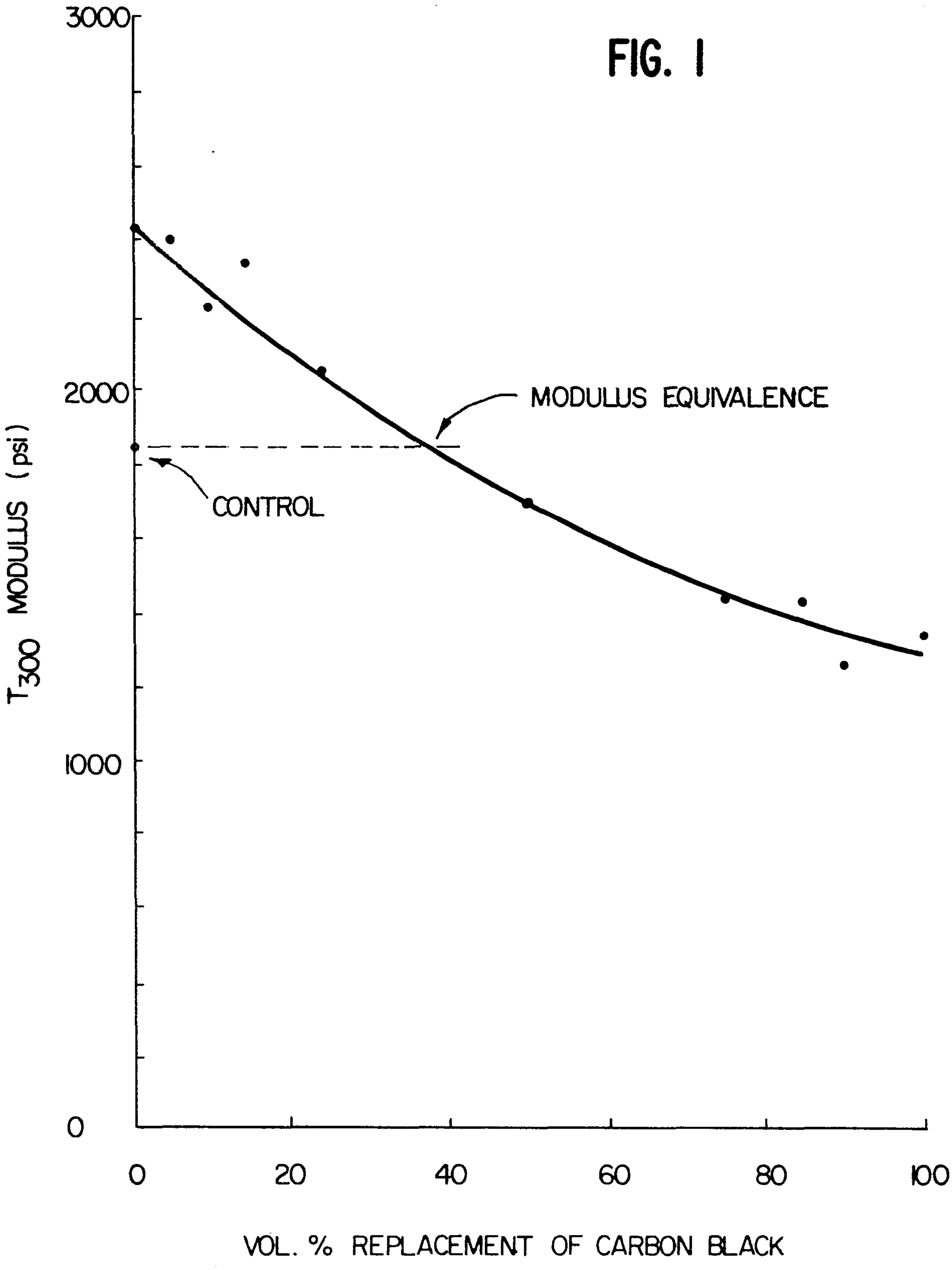
3000
2000
1000
0
T300 MODULUS (psi)
MODULUS EQUIVALENCE
CONTROL
0
20
40
60
80
100
VOL. % REPLACEMENT OF CARBON BLACK

FIG. 2

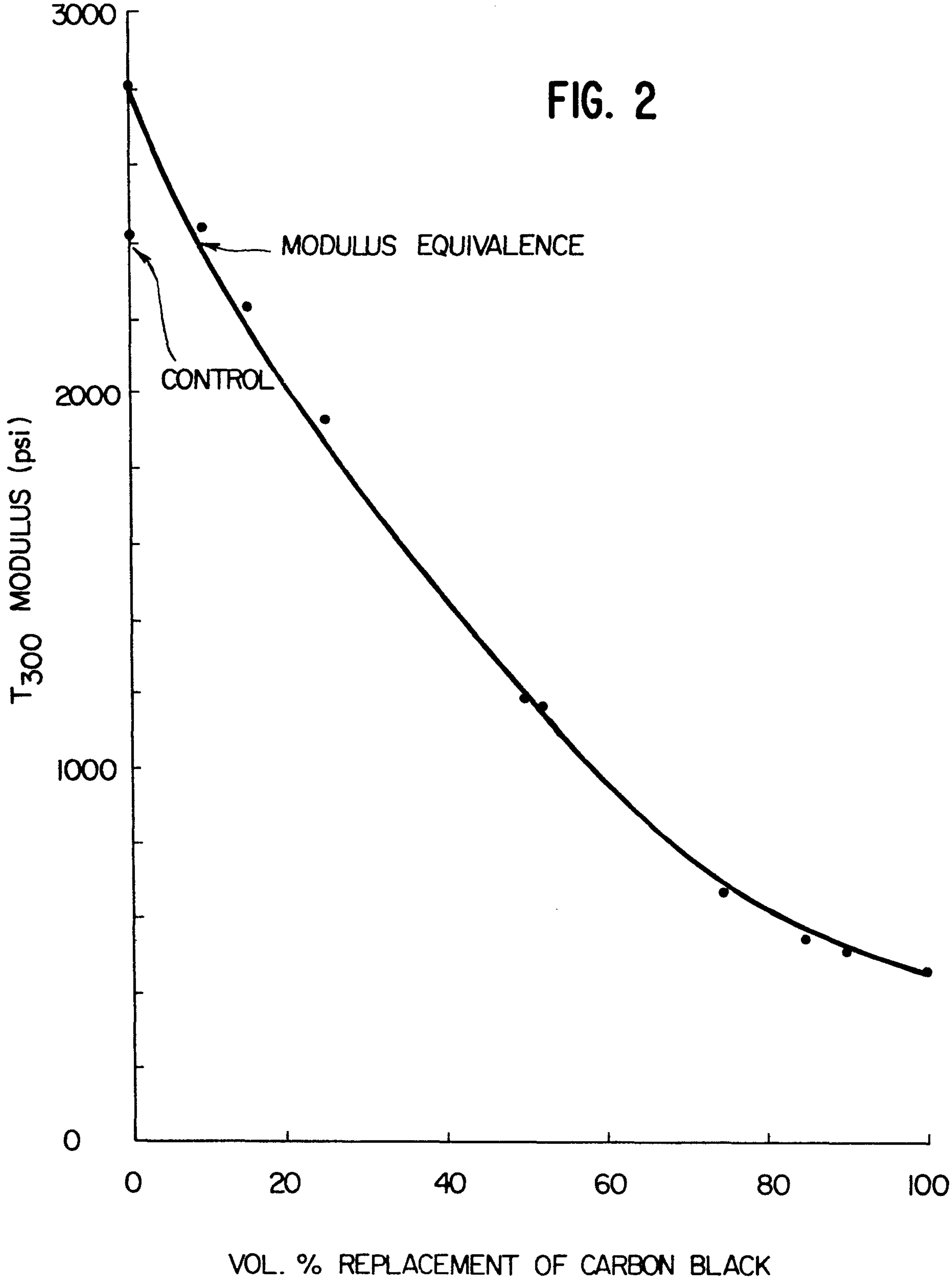
3000
2000
1000
0
$T_{300}$ MODULUS (psi)
MODULUS EQUIVALENCE
CONTROL
0
20
40
60
80
100
VOL. % REPLACEMENT OF CARBON BLACK

0178079

3/3

FIG. 3

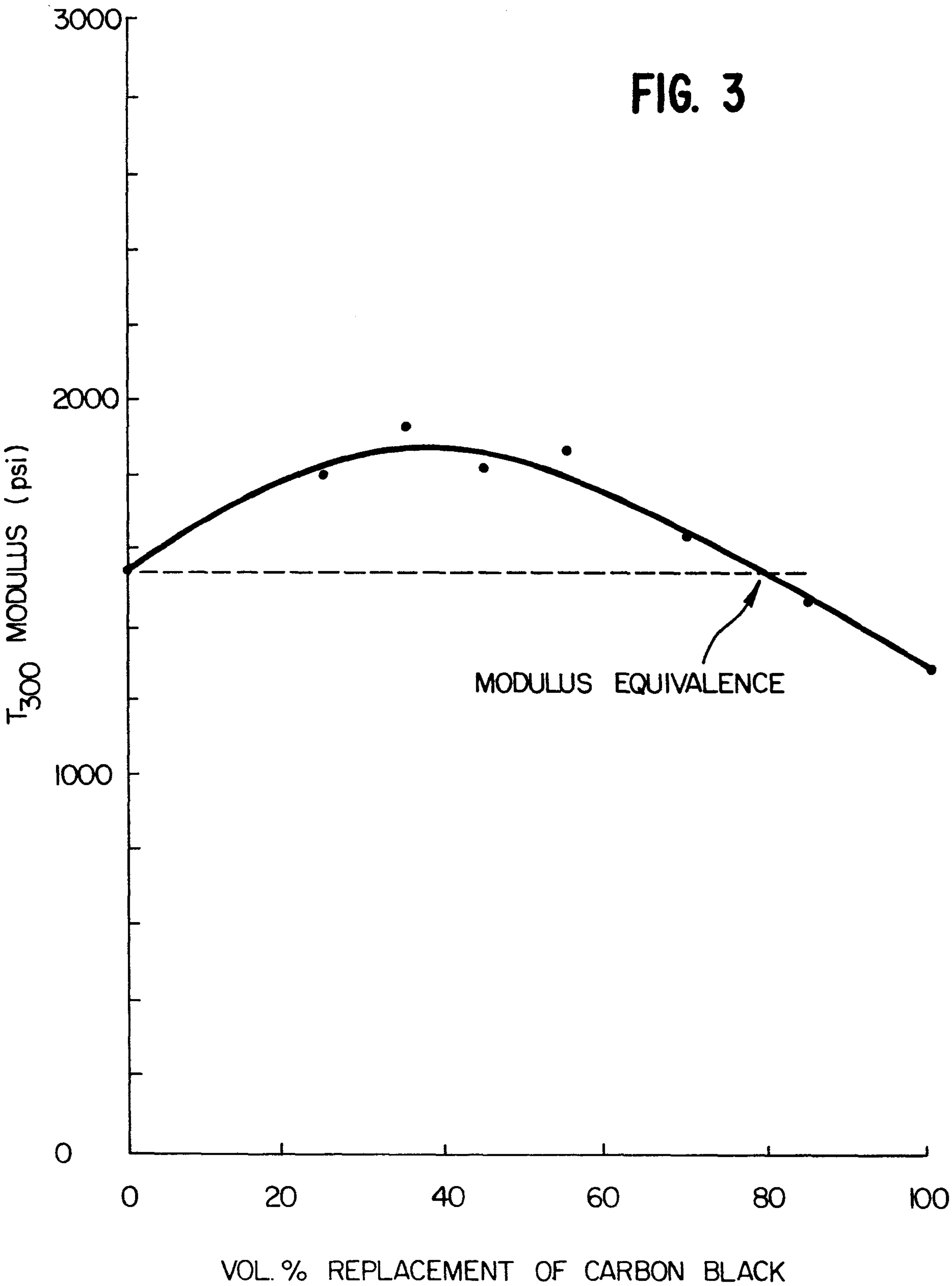

0175079

European Patent Office

# EUROPEAN SEARCH REPORT

Application number

EP 85 30 6495

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X,D | US-A-3 998 778 (G. BERG et al.) * Claim 1; column 3, lines 43-48; column 4, lines 63-66; column 5, lines 6-11; column 5, line 40 - column 6, line 7 * --- | 1-17 | C 08 K 3/34<br>C 08 K 3/04<br>C 08 K 9/04<br>C 08 L 21/00 |
| Y | CHEMICAL ABSTRACTS, vol. 99, 8th August 1983, page 59, no. 39654k, Columbus, Ohio, US; & SU - A - 1 011 660 (ALL-UNION SCIENTIFIC-RESEARCH INSTITUTE OF NONMETALLIC BUILDING MATERIALS AND HYDROMECHANIZATION) 15-04-1983 * Abstract * --- | 1-17 | |
| Y,D | US-A-3 627 723 (T.J. KEALY) * Claim 1; column 2, lines 25-37; examples * --- | 1-17 | TECHNICAL FIELDS SEARCHED (Int. Cl.4) |
| A | US-A-3 686 113 (O.W. BURKE) * Claims 1,5 * --- | | C 08 K<br>C 08 L |
| A | EP-A-0 099 710 (STANDARD OIL) * Claims 1,7 * ----- | | |

The present search report has been drawn up for all claims

| Place of search | Date of completion of the search | Examiner |
|---|---|---|
| THE HAGUE | 09-01-1986 | VAN HUMBEECK F.W.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document